(19) Europäisches Patentamt
European Patent Office
Office européen des brevets

(11) Publication number: **0 167 026**
**B1**

(12) **EUROPEAN PATENT SPECIFICATION**

(45) Date of publication of patent specification: **23.11.88**

(51) Int. Cl.$^4$: **A 01 N 37/06**, A 01 N 37/04

(21) Application number: **85107143.1**

(22) Date of filing: **11.06.85**

# (54) Plant growth regulator.

(30) Priority: **12.06.84 JP 120550/84**

(43) Date of publication of application:
**08.01.86 Bulletin 86/02**

(45) Publication of the grant of the patent:
**23.11.88 Bulletin 88/47**

(84) Designated Contracting States:
**BE CH DE FR GB IT LI NL SE**

(56) References cited:
**GB-A-1 433 647**
**US-A-4 071 348**
**AGRICULTURAL AND BIOLOGICAL CHEMISTRY, vol. 48, no. 10, October 1984, pages 2607-2609, Tokyo, JP; A. ISOGAI et al.: "Isolation and identification of (+)-hexylitaconic acid as a plant growth regulator"**
**COMMONWEALTH AGRICULTURAL BUREAU, no. 78268914, Slough, GB; E. KARANOV et al.: "Growth-regulating activity of some itaconic acid derivatives", & RESEARCH CENTRE FOR MOLECULAR BIOLOGY AND MEDICINE, 1974, pages 397-405**
**TETRAHEDRON LETTERS, no. 26, July 1973, pages 2333-2334, Pergamon Press, Oxford, GB; T. SASSA et al.: "Structure of radiclonic acid, a new plant growth-regulator produced by a fungus"**

(73) Proprietor: **AGRO-KANESHO CO., LTD.**
**No. 4-1, Marunouchi 2-chome**
**Chiyoda-ku Tokyo (JP)**

(72) Inventor: **Suzuki, Akinori**
**No. 1320-1-105 Sonnou-cho**
**Chiba-shi Chiba-ken (JP)**
Inventor: **Isogai, Akira**
**Tohdai Shukusha 4-201 No. 1-170**
**Yayoi-cho Chiba-shi Chiba-ken (JP)**
Inventor: **Hyeon, Suong Be**
**5-205, No. 4-1-23 Harigaya**
**Urawa-shi Saitama-ken (JP)**
Inventor: **Kikkawa, Takashi**
**No. 5-2-9, Kitamachi**
**Houya-shi Tokyo (JP)**
Inventor: **Someya, Shinzo**
**C-1108, No. 3-20, Nakaarai**
**Tokorozawa-shi Saitama-ken (JP)**

(74) Representative: **Vossius & Partner**
**Siebertstrasse 4 P.O. Box 86 07 67**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 167 026 B1

Courier Press, Leamington Spa, England.

**Description**

The present invention relates to a novel plant growth regulator. More particularly, it relates to a plant growth regulator comprising, as its active component, one or more compounds selected from [+]-hexylitaconic acid, the dihydro derivative and lower alkyl monoesters thereof.

There have been few physiologically active substances for plants that are naturally produced and actually being used at present. Among the few exceptions are gibberellic acids produced from *Gibberella fujikuroi* germs; cytokinin extracted from yeasts, coconut milk, fish sperms, etc. plant auxines and ethylene gas. Almost no physiologically active substances for plants produced from fungal metabolites are known and in particular no physiologically active substances which are as effective in plants as the useful gibberellic acids have yet been discovered.

Especially in the field of acceleration of rooting, which is the main characteristic of the present invention, no substance produced from fungi has been discovered at all. Although some synthetic compounds are known such as IBA (2-indolebutyric acid), 2,4,5-T (2,4,5-trichlorophenoxy acetic acid), NAD (naphthalene acetamide), 2,4-D (2,4-dichlorophenoxy acetic acid), NAA (naphthalene acetic acid) and abscisic acid. However these compounds, when used for acceleration of rooting, have deficiencies as set out below, and satisfactory uses are quite limited.

(1) The use of these compounds is limited to acceleration of rooting by soaking the rooting parts in the chemicals. This is because these compounds lack movement within the plant, particularly basipetal movement. This can be said for all the aforementioned substances, IBA, 2,4,5-T, NAD, 2,4-D, NAA and abscisic acid.

(2) Since the effective concentration and the critical concentration causing chemical damage are very close, some compounds cannot be used safely. The above 2,4,5-T, 2,4-D, NAD, NAA and abscisic acid are examples thereof.

(3) Some of the compounds are problematic because of their mammalian toxicity. The above 2,4,5-T and 2,4-D are examples of such cases.

While the conventional chemicals have unsolved problems as pointed out above, the naturally produced substances of the present invention have the following advantages:

(1) Their movement within the plant is considerable. Particularly, through foliar treatment they translocate into the lower parts of the plant and accelerate rooting. Thus they are quite convenient to use and very suitable for such purposes as growth promotion by acceleration of rooting and recovery of growth checked by environmental drawbacks.

(2) By treating cuttings of the plant with the substances, acceleration of rooting can also be effected.

(3) Since safety to plants is quite high, they can be used safely from early stages through the respective stages of growth.

(4) Safety for mammals is very high.

Since the substances of the present invention overcome the problems of the conventional chemicals, their agricultural and horticultural usefulness is remarkable.

In a series of studies on useful plant-activating substances produced from fungal metabolites, the inventors of the present invention discovered that substances from Aspergillus niger K—88 strain notably accelerate rooting of plants and confirmed that the active substance thereof was [+]-hexylitaconic acid whose structure is represented by the molecular formula $C_{11}H_{18}O_4$ or by the structural formula;

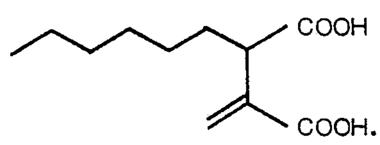

The inventors also found that the dihydro derivative and lower alkyl monoesters thereof have an excellent accelerating action on rooting.

As stated above, in a series of studies on useful physiologically active substance for plants produced from fungal metabolites, the inventors of the present invention discovered substances from Aspergillus niger K—88 strain that notably accelerate plant root length, particularly, in rice plant and lettuce. Analysis of the active substance from the purified substance from assay medium confirmed that the substance was [+]-hexylitaconic acid whose structure is represented by the molecular formula $C_{11}H_8O_4$ or by the structural formula;

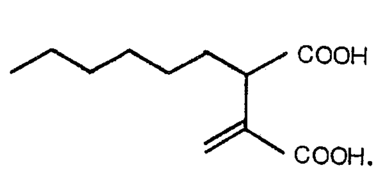

Though some publications on the syntheses of said [+]-hexylitaconic acid itself exist (N. S. McCorkindale, W. P. Backstock, G. A. Johnstone, T. R. Roy and J. A. Toke; refer to the 11th Iupac Int. Sump. Chem. Nat. Pro. *1*, 151 (1978)), none of the reports describes the circumstances under which the synthesis

was attempted and the purposes thereof. The separation of said [+]-hexylitaconic acid from natural products seems to have been made for the first time by the inventors of the present invention. Moreover, it is a novel discovery made by the inventors of the present invention that said [+]-hexylitaconic acid, the dihydro derivative and the lower alkyl monoesters thereof remarkably accelerate rooting, which suggests their useful application in farm product-growing.

Next, the separation and purification of said [+]-hexylitaconic acid and the synthesis of the dihydro derivative and lower alkyl monoesters thereof is explained.

I. Separation and Purification of [+]-Hexylitaconic Acid

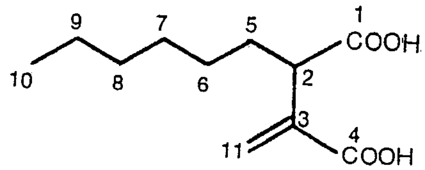

The Aspergillus niger K—88 strain separated from the soil of Ninomiya-cho, Kanagawa Prefecture was subjected to shaking culture in a Czapek-Dox culture medium at a temperature 26.5°C, for ten days, then 5.2 l culture filtrate (pH 2) was extracted with ethyl acetate, and the organic layer was extracted with sodium bicarbonate solution. The aqueous solution was adjusted to pH 3. After extraction with ethyl acetate, the organic layer was dried over sodium sulfate and evaporated under reduced pressure. 740 mg of oily acid material was obtained. The oil fraction was treated in a Wakogel C—100 column (φ3.1 × 43 cm) and rendered in hexane-ethyl acetate. The concentration of the ethyl acetate was gradually increased. The rendered solution having a hexane-ethyl acetate ratio 6:4 was successively divided into four equal divisions. From the crude active material of the second division, 74 mg of the pure product was obtained by thin layer chromatography of Kiesel gel $F_{254}$ (hexane-ethyl acetate-acetic acid 4:6:0.1). The characteristic data were as follows:

mp 46—47°C; $(\alpha)_D$ + 15.3 (c = 2.0, methanol), MS m/z:
214.1225 ($M^+$, 5%; Calculated value as $C_{11}H_{18}O_4$, 214.1195),
196.1074 (M—$H_2O$, 5%; Calculated value as $C_{11}H_{16}O_3$, 196.1034),
178.1010 (M—$2H_2O$, 5%; Calculated value as $C_{11}H_{14}O_2$, 178.0994),
196.1246 (M—COCH, 43%; Calculated value as $C_{10}H_{17}O_2$, 169.1229),
129.0117 (M—$C_6H_{13}$, 55%; Calculated value as $C_5H_5O_4$, 129.0188),
112 (M—$C_6H_{12}$—$H_2O$, 100%);
$IRv^{film}_{max}$ ($cm^{-1}$): 3300 — 2400, 1775, 1705, 1625.
$^{13}C$—NMRδ $\underline{C}$ ($CDCl_3$); 179.6 (s, C—1), 171.7 (s, C—4), 137.5 (s, C—3), 129.6 (t, C—11), 47.0 (d, C—2), 31.7 (t, C—8), 29.9 (t, C—5), 29.0 (t, C—7), 27.4 (t, C—6), 22.6 (t, C—9), 14.1 (q, C—10);
δ $\underline{C}$ ($CD_3OD$): 169.4 (s, C—4), 176.9 (s, C—1).
$^1H$—NMRδ $\underline{H}$ ($CDCl_3$): 0.83 (3H, t, J=6Hz, H—10), 1.25 (8H, br s, H—6·H—9), 1.80 (2H, m, H—5), 3.35 (1H, t, J=7Hz, H—2), 5.80 (1H, s, H—11a), 6.40 (1H, s, H—11b), 9.6 (2H, br s, 2 × COOH).

II. Synthesis of Dihydro Derivative

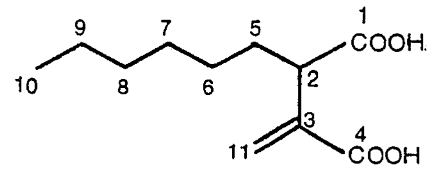

By reducing 20 mg of [+]-hexylitaconic acid in methanol using a platinum oxide catalyst, 20 mg of a dihydro derivative was obtained. The characteristic data thereof were as follows:

mp 109—112°C (Acetone — $H_2O$).
$IRv^{KBr}_{max.}$ ($cm^{-1}$): 3400 — 2400, 1690.
$^{13}C$—NMRδ $\underline{C}$ ($CD_3OD$): 178.5 (s, C—4 or C—1), 177.8 (s, C—1 or C—4), 50.0 (d, C—2), 43.3 (d, C—3), 32.5 (t, C—8), 31.8 (t, C—5), 29.9 (t, C—7), 28.3 (t, C—6), 23.4 (t, C—9), 15.8 (q, C—11), 14.2 (q, C—10),
$^1H$—NMRδ $\underline{H}$ ($CDCl_3$): 0.83 (3H, t, J=6Hz, H—10), 1.2—1.8 (13H, m, H—5·H—9, H—11), 2.7 (2H, m, H—2, H—3), 8.8 (2H, br s, 2 × COOH).

III. Synthesis of Monomethyl Ester Derivative

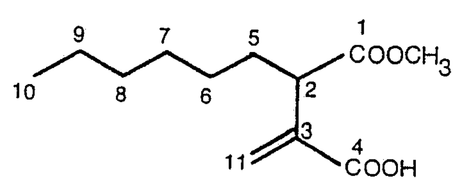

20 mg of [+]-hexylitaconic acid in methanol containing 5% HCl was refluxed for one hour, and the reaction mixture was poured to water and then extracted with ethyl acetate. The ethyl acetate layer was extracted with aqueous sodium bicarbonate solution. After adjusting the water layer to pH 3, it was reextracted with ethyl acetate. The extract was dried over anhydrous sodium sulfate and concentrated under reduced pressure. The concentrated residue was separated and purified by thin layer chromatography; thereby 10 mg of a monomethyl ester derivative was obtained. The characteristic data were as follows:

MS m/z: 228 ($M^+$, $C_{12}H_{20}O_4$), 197 (M—$OCH_3$), 183 (M—COOH), 143 (M—$C_6H_{13}$), 112 (M—$C_6H_{12}$ — $CH_3OH$).

$IR\nu^{film}_{max.}$ ($cm^{-1}$): 3400 — 2400, 1775, 1740, 1700, 1625.

$^{13}C$—NMRδ $\underline{C}$ ($CDCl_3$): 173.8 (s, C—1), 171.5 (s, C—4), 138.1 (s, C—3), 129.1 (t, C—11), 52.1 (q, $OCH_3$), 46.5 (d, C—2), 31.6 (t, C—8), 31.4 (t, C—5), 29.0 (t, C—7), 27.5 (t, C—6), 22.6 (t, C—9), 14.1 (q, C—10).

$^{1}H$—NMRδ $\underline{H}$ ($CDCl_3$): 0.82 (3H, t, J—6Hz), 1.2 (8H, br s), 1.8 (2H, m), 3.35 (1H, t, J=7Hz), 3.55 (3H, s, $OCH_3$), 5.80 (1H, s), 6.40 (1H, s).

Said [+]-hexylitaconic acid and the dihydro derivative thereof at concentrations of 1 to 20 ppm remarkably accelerate rooting of rice plants, lettuce, etc., and promote growth of foliar parts.

Fig. 1 shows the rooting acceleration effects on lettuce exerted by various concentrations of said [+]-hexylitaconic acid, the dihydro and monomethyl ester derivatives thereof. Fig. 2 shows the growth- and rooting-accelerating effects on paddy rice plants exerted by various concentrations of said [+]-hexylitaconic acid.

The present invention is described in detail by concrete examples. The present invention is, of course, not limited to these Examples.

## Example 1

Rooting Test on Lettuce

A sheet of filter paper having a diameter 5.5 cm was laid on a petri dish and a definite amount of test substance dissolved in acetone was added thereon. After the acetone had been evaporated, 2 ml of a Hoagland solution was added to the petri dish, and seven germinating lettuce seeds were placed on each dish. The treated dishes were irradiated at 3000 lux for three days, and kept at a temperature of 25 ± 2°C.

Test Results:

Fig. 1 shows the rooting rates obtained by treatment with the [+]-hexylitaconic acid, the dihydro derivative and the monomethyl ester derivative thereof at the respective concentrations. As clearly shown in Fig. 1, all the respective substances exhibited rooting-acceleration effects at concentrations of about 1 to 20 ppm, while higher concentrations of 50 to 100 ppm, checked growth.

## Example 2

Rooting Test on Paddy Rice Plant

In a test tube of a diameter 2.5 cm, a definite amount of [+]-hexylitaconic acid dissolved in acetone was added, whereafter the acetone was evaporated. 2 ml of eight-times diluted solution of Kimura's B Liquid [The composition of the liquid was as follows:

| | | | |
|---|---|---|---|
| $(NH_4)_2SO_4$ | 18.2 mg | N | 23.0 mg |
| | | ($NH_4$ — N 10.2) | |
| | | ($NO_3$ — N 12.8) | |
| $K_2SO_4$ | 15.9 mg | $P_2O_3$ | 13.0 mg |
| $MgSO_4$ | 65.9 mg | $K_2O$ | 17.2 mg |
| $KNO_3$ | 18.5 mg | CaO | 20.5 mg |
| $Ca(NO_3)_2$ | 59.9 mg | MgO | 22.1 mg |
| $KH_2PO_4$ | 24.8 mg | | |
| Fe-citrate | 2—5 mg as $Fe_2O_3$ | | |

Refer to "Methods for Testing Farm Products, by Baba and Takahashi (under the supervision of Tokari), published by Nogyo Gijutsu Kyokai, 1959] was added to the tube. Five grains of germinating paddy rice plants were placed in each tube. The test tubes were covered with plastic films, irradiated at 3000 lux for seven days and kept at a temperature of 30 ± 2°C.

Test Results:

Fig. 2 shows the activity of [+]-hexylitaconic acid on growth- and rooting-acceleration. As clearly shown in Fig. 2, [+]-hexylitaconic acid remarkably accelerated the rooting of the paddy rice plants at

concentrations of 2 ppm to 20 ppm. And, the whole length of the overground parts of the plants (the length of the foliar parts) was increased by about 20% at a concentration of 20 ppm.

Example 3

Rooting-acceleration Test on Seedlings of Rice Plant

After spraying a 50 ppm or 25 ppm concentration of [+]-hexylitaconic acid over the foliar parts of 10 seedlings per block of rice plant grown to the 2.5 leaf stage and cutting the root length to 2 cm, the seedlings were hydroponically cultured. Two weeks later, the number of rootings were determined. Alternatively, after cutting the root length of 10 seedlings of rice plant per block to 2 cm, the seedlings were hydroponically cultured in a 50 ppm or 25 ppm solution of [+]-hexylitaconic acid. Two weeks later, the number of rootings were determined.

Test Results:

TABLE 1

Number of Rootings of Seedlings of Rice Plant

| Concentration of Sample (ppm) | Foliar Treatment | Soaking Treatment |
|---|---|---|
| 50 | 72 (156%) | 108 (177%) |
| 25 | 74 (160%) | 107 (175%) |
| Untreated | 46 (100%) | 61 (100%) |

As clearly shown in Table 1, a very remarkable increase in the number of rootings was noted in seedlings subjected to both foliar treatment as well as soaking treatment.

**Claims**

1. A plant growth regulator, comprising as its active component one or more compounds selected from [+]-hexylitaconic acid, the dihydro derivative and the lower alkyl monoesters thereof.

2. A plant growth regulator according to Claim 1, comprising as its active component [+]-hexylitaconic acid.

3. A plant growth regulator according to Claim 1, comprising as its active component the dihydro derivative of [+]-hexylitaconic acid.

4. A plant growth regulator according to Claim 1, comprising as its active component the monomethyl ester of [+]-hexylitaconic acid.

**Patentansprüche**

1. Pflanzenwuchsregler, umfassend als aktive Komponente mindestens eine der Verbindungen [+]-Hexylitaconsäure, deren Dihydro-Derivat oder ihre Niederalkyl-Monoester.

2. Pflanzenwuchsregler nach Anspruch 1, umfassend als aktive Komponente [+]-Hexylitaconsäure.

3. Pflanzenwuchsregler nach Anspruch 1, umfassend als aktive Komponente das Dihydro-Derivat von [+]-Hexylitaconsäure.

4. Pflanzenwuchsregler nach Anspruch 1, umfassend als aktive Komponente den Monomethylester von [+]-Hexylitaconsäure.

**Revendications**

1. Régulateur de croissance de plantes, comprenant comme composant actif un ou plusieurs composés choisis parmi l'acide [+]-hexylitaconique, son dérivé dihydro et ses monoesters alkyliques inférieurs.

2. Régulateur de croissance de plantes suivant la revendication 1, comprenant comme composant actif l'acide [+]-hexylitaconique.

3. Régulateur de croissance de plantes suivant la revendication 1, comprenant comme composant actif le dérivé dihydro d'acide [+]-hexylitaconique.

4. Régulateur de croissance de plantes suivant la revendication 1, comprenant comme composant actif l'ester monométhylique d'acide [+]-hexylitaconique.

FIG.1

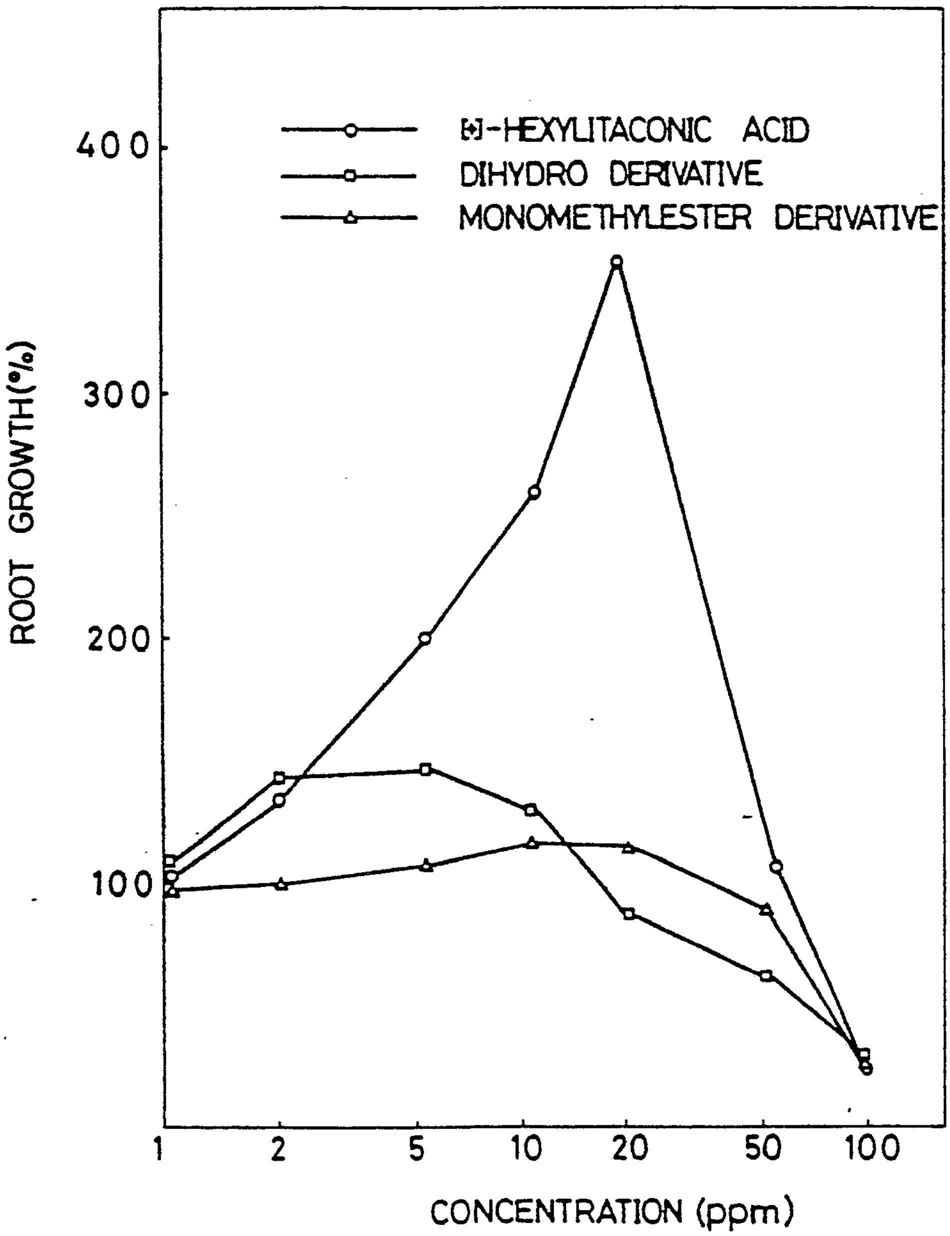
(±)-HEXYLITACONIC ACID
DIHYDRO DERIVATIVE
MONOMETHYLESTER DERIVATIVE
ROOT GROWTH(%)
400
300
200
100
1
2
5
10
20
50
100
CONCENTRATION (ppm)

FIG.2

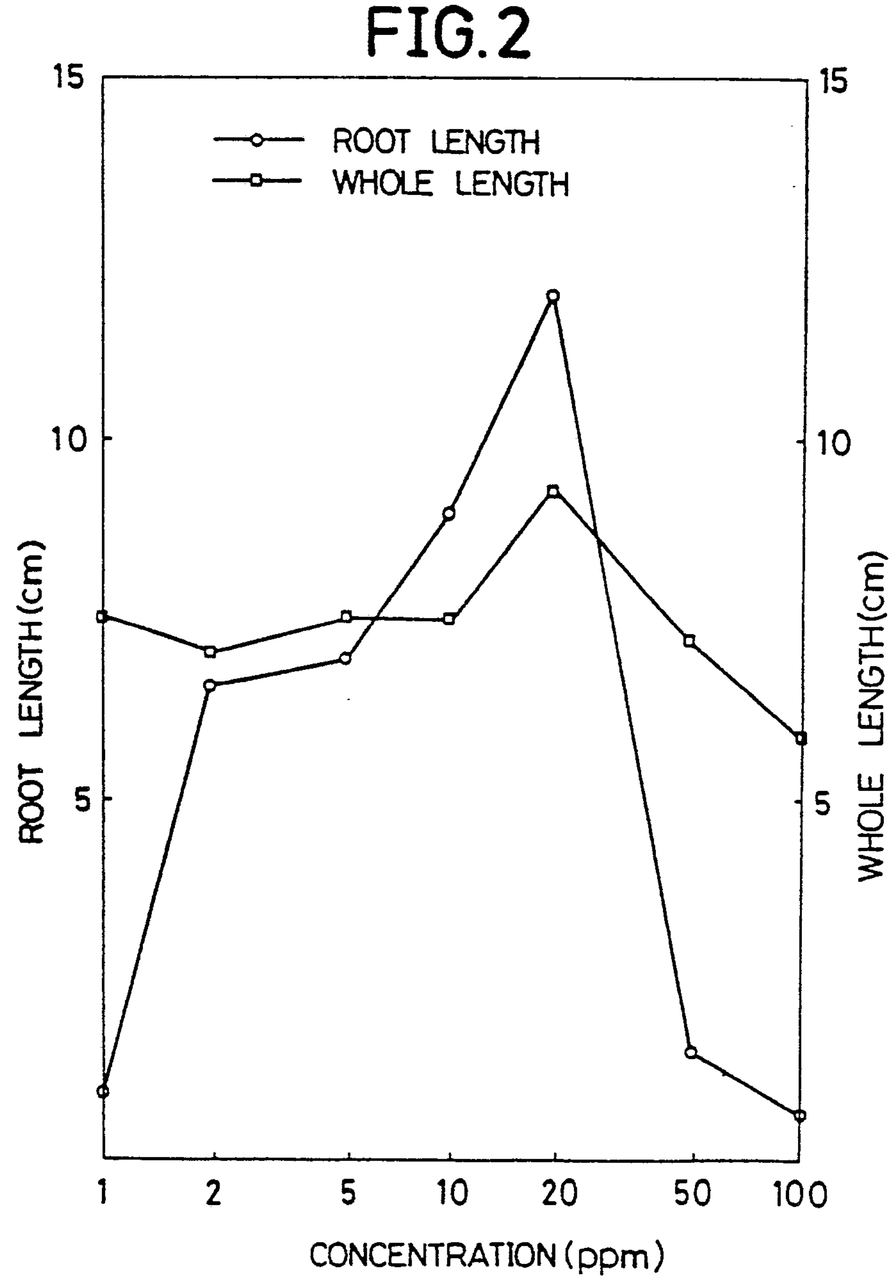
15
10
5
15
10
5
ROOT LENGTH
WHOLE LENGTH
ROOT LENGTH (cm)
WHOLE LENGTH (cm)
1
2
5
10
20
50
100
CONCENTRATION (ppm)